# EUROPÄISCHE PATENTSCHRIFT

(11) **EP 3 017 216 B1**
(45) Veröffentlichungstag und Bekanntmachung des Hinweises auf die Patenterteilung: **28.06.2017**
(21) Anmeldenummer: 15700223.9
(22) Anmeldetag: 12.01.2015
(51) Int. Cl.: F16J 9/06, F16J 9/20

(54) **REIBOPTIMIERTER ÖLABSTREIFRING**
FRICTION-OPTIMISED OIL-SCRAPER RING
SEGMENT RACLEUR D'HUILE À FRICTION OPTIMISÉE

(30) Priorität: 28.04.2014 DE 102014207895
(43) Veröffentlichungstag der Anmeldung: 11.05.2016
(62) Teilanmeldung aus: 15198261.8
(73) Patentinhaber: Federal-Mogul Burscheid GmbH, 51399 Burscheid (DE)
(72) Erfinder: PRÖPPER, Jörn, 51375 Leverkusen (DE); RUCH, Fabian Horst, 51375 Leverkusen (DE)
(74) Vertreter: Becker Kurig Straus
(86) Internationale Anmeldenummer: PCT/EP2015/050413
(87) Internationale Veröffentlichungsnummer: WO 2015/165596

(56) Entgegenhaltungen:
- WO-A1-02/097310
- WO-A1-2013/010520
- WO-A1-2013/178204
- DE-B3- 10 322 032

## Beschreibung

Die vorliegende Erfindung betrifft einen reiboptimierten Ölabstreifring für Kolbenmotoren, insbesondere für Verbrennungsmotoren.

Bisherige Ölabstreifringe umfassen üblicherweise 2 Abstreifstege oder "Rails", die parallel an eine Zylinderinnenwand gedrückt werden. Es ist weiterhin bekannt, Öl-Abstreifringe mit Löchern oder Schlitzen zu versehen, um das abgestreifte Öl über den Grund einer Ringnut und Kanäle in einem Kolben zurück in eine Ölwanne zu befördern. Es ist ebenfalls üblich, eine Ringfeder bzw. eine Schlauchfeder oder einen Expander bei einem Öl-Abstreifring einzusetzen, um eine möglichst gleichmäßige Andruckverteilung zu erreichen. Es ist bereits eine unübersehbare Menge an Ölabstreifringen bekannt, daher wird hier nur auf das deutsche Gebrauchsmuster 8503197, das Europäische Patent EP 1248022 B1, die deutsche Patentschrift DE 10322032B3 sowie die Europäischen Patentschrift EP 0857900 B1 verwiesen. WO 2013/178204 offenbart einen Ölabstreifring gemäß dem Oberbegriff des Anspruchs 1.

Es ist eine Aufgabe der vorliegenden Erfindung, einen Ölabstreifring bereit zu stellen, der eine geringere Reibung aufweist.

Diese Aufgabe wird gelöst mit einem Kolbenring mit den Merkmalen des unabhängigen Anspruchs 1. Bevorzugte Ausführungen sind in den abhängigen Ansprüchen beschrieben.

In einer Ausführungsform des erfindungsgemäßen Ölabstreifrings für einen Kolben eines Kolbenmotors umfasst dieser einen Ringkörper und (nur) einen umlaufenen Öl-Abstreifsteg. Der Ölabstreifring weist zwischen einer oberen Ringflanke und einer unteren Ringflanke eine Dicke zwischen 2 und 5 mm auf. Die Lauffläche des Abstreifstegs weist in einem radialen Querschnitt einen Krümmungsradius r zwischen 1/40 bis 1/10 der Höhe H auf. Bevorzugt ist nur ein Abstreifsteg vorgesehen, mehr als einer ist ausgeschlossen.

Der Begriff "radialer Querschnitt" soll einen Schnitt in einer Ebene beschreiben, in dem die Symmetrie- bzw. Rotationsachse des Rings bzw. des Zylinders liegt, in dem der Kolbenring betrieben werden soll. Der Begriff "radialer Querschnitt" ist damit senkrecht zu einer Tangentialebene und senkrecht zu der Ringebene, in der sich der Kolbenring erstreckt.

In einer weiteren beispielhaften Ausführungsform des Ölabstreifrings weist der Ölabstreifring eine Höhe von 2,5 bis 4 mm auf. In einer zusätzlichen Ausführungsform des Ölabstreifrings weist der Ölabstreifring eine Höhe von 3 bis 3,5mm auf.

In einer anderen beispielhaften Ausführungsform des Ölabstreifrings beträgt der Krümmungsradius der Lauffläche 1/30 bis 1/15 der Höhe des Ölabstreifrings. In einer weiteren beispielhaften Ausführungsform des Ölabstreifrings beträgt der Krümmungsradius der Lauffläche 1/25 bis 1/20 der Höhe des Ölabstreifrings.

In einer zusätzlichen beispielhaften Ausführungsform des Ölabstreifrings umfass dieser weiter einen Expander.

In einer weiteren beispielhaften Ausführungsform des Ölabstreifrings ist der Ölabstreifring mit einer Schlauchfederanordnung oder mit zwei Schlauchfedern versehen.

In einer zusätzlichen weiteren beispielhaften Ausführungsform des Ölabstreifrings ist ein Rücken des Abstreifsteges mit einer Verschleißschutzbeschichtung beschichtet.

Gemäß einer weiteren zusätzlichen beispielhaften Ausführungsform ist der Ölabstreifring an zumindest der Lauffläche mit einer Verschleißschutzbeschichtung versehen. Gemäß einer zusätzlichen beispielhaften Ausführungsform ist der Ölabstreifring an zumindest der Lauffläche mit einer "Diamond-like-Carbon"-Beschichtung versehen. Gemäß einer weiteren beispielhaften Ausführungsform ist der Ölabstreifring an zumindest der Lauffläche mit einer amorphen hoch-harten Carbon-basierten Schicht beschichtet, welche die Schmierfähigkeit verbessert und eine Härte von bis zu 5000 HV 0.2 sowie eine Temperaurbeständigkeit von bis zu 500°C sowie eine Beschichtungsdicke von bis zu 25 µm aufweist. Bevorzugt weist die amorphe hoch-harte Carbon-basierten Schicht eine Härte zwischen 4000 und 5000 HV 0.2 sowie eine Temperaurbeständigkeit zwischen 450 und 500°C sowie eine Beschichtungsdicke zwischen 15 und 25 µm, bevorzugt zwischen 20 und 25µm auf.

Bei einer weiteren beispielhaften Ausführungsform des Ölabstreifrings ist die Lauffläche im Wesentlichen in der Mitte zwischen der oberen und der unteren Ringflanke angeordnet.

Bei einer zusätzlichen beispielhaften Ausführungsform des Ölabstreifrings ist die obere Stegflanke in einem Schnitt entlang der Achse konvex geformt. Dadurch kann die Abstreifwirkung bei einer Aufwärtsbewegung des Kolbens verringert werden.

Bei einer anderen beispielhaften Ausführungsform des Ölabstreifrings ist die untere Stegflanke in einem Schnitt entlang der Achse konkav geformt. Dadurch kann die Abstreifwirkung bei einer Abwärtsbewegung des Kolbens verbessert werden.

Bei einer weiteren beispielhaften Ausführungsform des Ölabstreifrings beträgt die Tangentialkraft des Ölabstreifrings oder die Tangentialkraft der Ringfeder bzw. der Schlauchfeder 52% bis 68%, bevorzugt 55% bis 65%, weiter bevorzugt 57% bis 63% eines vergleichbaren Ölabstreifrings mit zwei Abstreifstegen.

In einer zusätzlichen beispielhaften Ausführungsform des Ölabstreifrings umfasst dieser keine radialen Ölkanäle.

Bei einer anderen beispielhaften Ausführungsform bildet die Lauffläche wie ein Gewindegang einen Wendel.

In einer weiteren beispielhaften Ausführungsform des Ölabstreifrings ist die Lauffläche im Bereich des Ringspalts jeweils in Umlaufrichtung verlängert und die Laufflächen überlappen einander in Umlaufrichtung. In dieser Ausführungsform wird der Ringspalt an dem nunmehr einen Abstreifsteg durch eine Überlappung weiter abgedichtet. Diese Überlappung ist nur möglich, da der einzelne Abstreifsteg seine Position in Axialrichtung über den Umfang verändert. In einer Ausführungsform bildet der Abstreifsteg etwas mehr als einen Gewindegang, der sich am Ringspalt überlappt. Es sollte dem Fachmann klar sein wie ein Ringspalt zu gestalten ist, um eine derartige Überlappung zu ermöglichen. Die Überlappung kann dabei lediglich wenige bis einige mm betragen.

In einer weiteren zusätzlichen beispielhaften Ausführungsform des Ölabstreifrings ist die Lauffläche oder der gesamte Ölabstreifring mit mehreren Beschichtungen überzogen. Mehrere Beschichtungen können die Haftung einer Schicht verbessern. Mehrere Schichten können auch Spannungssprünge in dem Kolbenring an den Schichtgrenzen verringern und so die Lebensdauer einer Beschichtung verbessern. Es ist ebenso vorgesehen, eine Beschichtung erst nach einer Nitrierung eines Teils oder der gesamten Oberfläche des Ölabstreifrings aufzubringen. Eine Beschichtung kann auf die Lauffläche, auf die gesamte Außenfläche oder auf die gesamte Oberfläche des Ölabstreifrings aufgebracht werden.

Im Folgenden wird die Erfindung anhand von schematischen Figuren von ausgewählten Ausführungsformen verdeutlicht.
Figur 1 zeigt einen Querschnitt durch einen erfindungsgemäßen Ölabstreifring, bei dem die Lauffläche durch einen Draht aus verschleißfestem Material gebildet ist.
Figur 2 zeigt eine andere Ausführung des Ölabstreifrings von Figur 1, bei dem die Lauffläche einen Gewindegang bildet.

Detaillierte Beschreibung der Figuren.

Sowohl in der Beschreibung als auch in den Figuren werden gleiche oder ähnliche Bezugszeichen verwendet, um auf gleiche oder ähnliche Elemente und Komponenten Bezug zu nehmen.

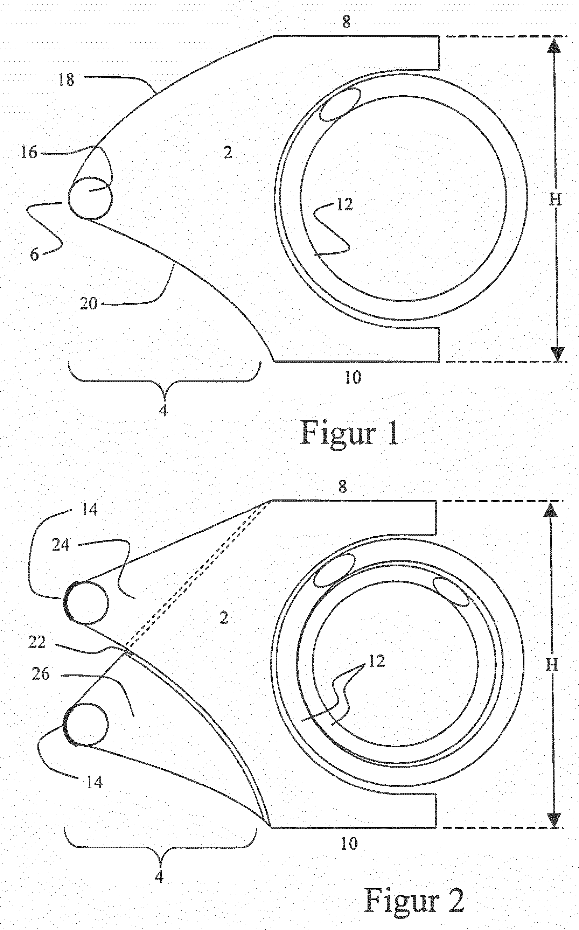

Figur 1 zeigt einen Querschnitt durch einen erfindungsgemäßen Kolbenring 2. Der Ölabstreifring 2 stellt einen Ölabstreifring mit lediglich einem Ölabstreifsteg 4 dar, der an einem Ringkörper angeformt ist. Der Ölabstreifring 2 weist zwischen einer oberen Ringflanke 8 und einer unteren Ringflanke 10 eine Höhe H von 2 bis 5 mm auf. Die Lauffläche 6 des Abstreifstegs weist in einem radialen Querschnitt einen Krümmungsradius r zwischen 1/40 bis 1/10 der Höhe (H) auf. Insgesamt ist der erfindungsgemäße Ölabstreifring mit einem sehr kleinen Krümmungsradius an dem Rücken des Abstreifstegs 4 versehen. Dieses ermöglicht ein Abstreifen des Öls durch einen einzelnen Abstreifsteg. Unter der Annahme, dass das aus dem System beförderte Öl nicht mehr für die Hydrodynamik relevant sein kann, lässt sich schließen, dass der übliche zweite Abstreifsteg keine besondere Wirkung (außer Reibung) entfalten kann. Die Abstreifwirkung und damit der hinterlassene Ölfilm sind abhängig von der Abstreifgeschwindigkeit, der Ölviskosität und der Flächenpressung. Damit kann der zweite Abstreifsteg keinen besonderen Effekt mehr entfalten. Es ist zu erwarten, dass bei Systemen mit zwei Laufflächenstegen der obere Steg bei einer Abwärtsbewegung keinen signifikant geringeren Ölfilm hinterlassen kann als der untere Steg.

Der dargestellte Ölabstreifring 2 weist einen Krümmungsradius r auf, der etwa dem 15,5 ten Teil der Höhe H entspricht. Es sind jedoch auch andere Abmessungen bzw. Abmessungs-Verhältnisse möglich. Es sind größere und kleinere Krümmungsradien r zwischen 1/40 bis 1/30 H möglich. Es können sich auch Krümmungsradien r zwischen 1/30 und 1/25 H als vorteilhaft erweisen. Es sind ebenfalls Krümmungsradien zwischen 1/25 und 1/20 H möglich. Weiterhin können je nach Abmessungen des Kolbenrings Krümmungsradien r zwischen 1/20 und 1/15 H bevorzugt werden. Es ist ebenfalls vorgesehen Krümmungsradien zwischen 1/15 und 1/10 H einzusetzen. Vor allem bei Verwendung einer Schlauchfeder oder mehrerer Schlauchfedern ineinander kann der Krümmungsradius an den unteren oder oberen Grenzen der vorstehend angegebenen Bereiche gewählt werden.

Der dargestellte Ölabstreifring 2 weist eine Höhe H von 5 mm auf er kann jedoch bevorzugt eine Höhe zwischen 2,5 und 4 mm oder zwischen 3 bis 3,5mm aufweisen.

Der Krümmungsradius wird dabei direkt an der Kontaktstelle des Abstreifrings mit einer Zylinderinnenwand betrachtet. Ein Verschleiß kann daher diese Eigenschaften verändern.

In der Figur 1 ist der Ölabstreifring 2 mit einem Expander versehen, der als Schlauchfeder ausgeführt ist.

Der Ölabstreifring kann mit einer zusätzlichen Beschichtung versehen sein. Die Beschichtung kann aus einem verschleißfesten Material hergestellt sein. Hier wird trotz der Abrundung und einem erhöhten Anpressdruck eine hohe Laufleistung durch die Beschichtung erreicht. Um selbst unter den schwierigsten Bedingungen richtig arbeiten zu können, kann eine Hartschicht oder eine andere Beschichtung aus Diamond-like Carbon verwendet werden.

Als Beschichtung kann eine Hartschicht oder eine andere Diamond-like-Carbon Beschichtung verwendet werden.

Diamond-like-Carbon Beschichtungen umfassen tetraedrische wasserstofffreie amorphe Kohlenstoffschichten, auch "ta-C" genannt, die sp³-hybridisierte Bindungen umfassen, weshalb sie den Diamantschichten gleichzusetzen sind. Eine derartige hoch-harte amorphe Carbon-basierte Schicht kann die Schmierfähigkeit verbessern und eine Härte von 4000 bis zu 5000 HV 0.2 sowie eine Temperaurbeständigkeit von 470 bis zu 500°C sowie eine Beschichtungsdicke von 18µm bis zu 25 µm umfassen. Vor allem eine große Dicke der "ta-C" Schicht ermöglicht einen langen Einsatz auch bei nur einer hochbelasteten Lauffläche einer einzelnen Abstreifschiene 4.

In Figur 1 ist die Lauffläche 6 im Wesentlichen in der Mitte zwischen der oberen 8 und der unteren Ringflanke 10 angeordnet. Dieser Ölabstreifring kann mit einer zwischen 52% und 55% oder zwischen 55% und 57% der Tangentialkraft eines herkömmlichen Ölabstreifrings betreiben werden. Es ist jedoch aufgrund der festeren Beschichtung ebenfalls möglich, den Ölabstreifring mit 57 % bis 63% oder 63% bis 68% der Tangentialkraft eines herkömmlichen Ölabstreifrings zu versehen. Durch die extrem harte Oberfläche der runden Abstreifkante sind selbst die erhöhten Tangentialdrücke möglich, die bei herkömmlichen Ölabstreifringen bei gleichen Flächenpressungen zu einem erhöhten Verschleiß führen würden.

Es ist ebenfalls möglich, die gesamte Oberfläche des Ölabstreifrings mit einer ta-C Schicht zu versehen.

In Figur 1 ist die obere Stegflanke 18 des Ölabstreifrings konvex geformt. Die untere Stegflanke 20 des Ölabstreifrings 2 ist hingegen in der Schnittdarstellung konkav geformt.

In Figur 1 ist die Lauffläche 6 des Ölabstreifrings 2 durch einen Draht aus verschleißfestem Material gebildet. Der Draht ist als Runddraht ausgeführt, kann jedoch auch andere Querschnitte aufweisen. Durch den Draht kann ein weniger starres Material für einen Ringkörper des Ölabstreifrings 2 verwendet werden. In dieser Ausführung kann der Ölabstreifring flexibler ausgeführt werden, da nur in dem Drahtteil eine hohe Festigkeit notwendig ist. Dadurch kann der Ring so gestaltet werden, dass lediglich die Schlauchfeder 12 die Tangentialkraft erzeugt. Durch diese Bauweise kann auch die Bruchgefahr bei der Montage verringert werden.

Figur 2 zeigt eine andere Ausführung des Kolbenrings von Figur 1, bei dem die Lauffläche durch einen Draht aus verschleißfestem Material gebildet ist und bei dem die Lauffläche zusätzlich mit einer Verschleißschutzbeschichtung versehen ist. Zusätzlich ist die Lauffläche nicht in einer konstanten Höhe bzw. mit einem konstanten Abstand zu der Ringflanke angeordnet. Die Lauffläche 6 senkt sich wie ein Gewindegang bzw. ein Wendel von einem Ende zu dem anderen Ende des Rings. Durch diesen Verlauf sind die Laufflächen am Ringspalt versetzt zueinander angeordnet, wodurch der Spalt von jedem der Enden überbückt werden kann, sodass sich die Enden in Umfangsrichtung bzw. je nach Betrachtungsweise in Axialrichtung überlappen. Dadurch können Gas- und Ölflüsse am Ringspalt verringert werden.

Ein wendelförmig verlaufender Abstreifsteg kann zudem ein Drehen bzw. Wandern des Rings in der Kolbenringnut begünstigen, sowie die Ölverteilung in Umfangsrichtung verbessern.

Weiterhin sind in der Ausführungsform von Figur 2 zwei Schlauchfedern 12 dargestellt, die einen noch größeren Anteil an der Tangentialkraft übernehmen.

Alle Ausführungsformen sind ohne radiale Ölkanäle dargestellt, da durch die Geometrie einer konkaven unteren Stegflanke ein hinreichend großes Ölrückhaltevolumen bereitgestellt werden kann.

Die in den Figuren dargestellten Ausführungen betreffen lediglich beispielhafte Ausführungen. Aus Gründen der Übersichtlichkeit sollten jedoch auch alle anderen Kombinationen von Merkmalen als offenbart angesehen werden, wie sie sich aus Kombinationen verschiedener Figuren kombinieren lassen.

### Bezugszeichenliste

- 2: Kolbenring
- 4: Öl-Abstreifsteg
- 6: Lauffläche
- 8: obere Ringflanke
- 10: untere Ringflanke
- 12: Schlauch bzw. Ringfeder
- 14: Beschichtung
- 16: Draht
- 18: obere Stegflanke
- 20: untere Stegflanke
- 22: Ringspalt
- 24: oberes Ende des Stegs
- 26: unteres Ende des Stegs

## Patentansprüche

1. Ölabstreifring (2) für einen Kolben eines Kolbenmotors mit
einem Ringkörper (2),
einem umlaufenen Öl-Abstreifsteg (4),
wobei der Ölabstreifring (2) zwischen einer oberen Ringflanke (8) und einer unteren Ringflanke (10) eine Höhe (H) von 2 bis 5 mm aufweist,
wobei die Lauffläche (6) des Abstreifstegs in einem radialen Querschnitt einen Krümmungsradius (r) aufweist, der zwischen 1/40 bis 1/10 der Höhe (H) beträgt, **dadurch gekennzeichnet, dass** die Lauffläche (6) des Abstreifsteges (4) durch einen umlaufenden Draht (16) aus einem hochfesten Material gebildet ist.

2. Ölabstreifring (2) gemäß Anspruch 1, **dadurch gekennzeichnet, dass** der Ölabstreifring (2) eine Höhe (H) von 2,5 bis 4 mm, bevorzugt von 3 bis 3,5mm aufweist.

3. Ölabstreifring (2) gemäß Anspruch 1 oder 2, **dadurch gekennzeichnet, dass** der Krümmungsradius (r) der Lauffläche (6) 1/30 bis 1/15, bevorzugt 1/25 bis 1/20 der Höhe (H) des Ölabstreifrings beträgt.

4. Ölabstreifring (2) gemäß Anspruch 1, 2 oder 3, **dadurch gekennzeichnet, dass** der Ölabstreifring (2) weiter einen Expander (12) umfasst.

5. Ölabstreifring (2) gemäß Anspruch 1, 2, 3 oder 4, **dadurch gekennzeichnet, dass** der Ölabstreifring (2) eine Schlauchfederanordnung mit einer oder zwei Schlauchfedern (12) ist.

6. Ölabstreifring (2) gemäß einem der vorstehenden Ansprüche, **dadurch gekennzeichnet, dass** ein Rücken des Abstreifsteges (4) mit einer Verschleißschutzbeschichtung (14) beschichtet ist.

7. Ölabstreifring (2) gemäß Anspruch 6, **dadurch gekennzeichnet, dass** die Beschichtung (14) Diamond-like-Carbon oder eine amorphe hoch-harte Carbon-basierte Schicht ist, welche die Schmierfähigkeit verbessert und eine Härte von bis zu 5000 HV 0.2 sowie eine Temperaurbeständigkeit von bis zu 500°C sowie eine Beschichtungsdicke von bis zu 25 µm umfasst.

8. Ölabstreifring (2) gemäß einem der vorstehenden Ansprüche, **dadurch gekennzeichnet, dass** die Lauffläche (6) im Wesentlichen in der Mitte zwischen der oberer (8) und der unterer Ringflanke (10) angeordnet ist.

9. Ölabstreifring (2) gemäß einem der vorstehenden Ansprüche, **dadurch gekennzeichnet, dass** die obere Stegflanke (18) in einem Schnitt entlang der Achse konvex geformt ist.

10. Ölabstreifring (2) gemäß einem der vorstehenden Ansprüche, **dadurch gekennzeichnet, dass** die untere Stegflanke (20) in einem Schnitt entlang der Achse konkav geformt ist.

11. Ölabstreifring (2) gemäß einem der vorstehenden Ansprüche, **dadurch gekennzeichnet, dass** der Ölabstreifring (2) keine radialen Ölkanäle umfasst.

12. Ölabstreifring (2) gemäß einem der vorstehenden Ansprüche, **dadurch gekennzeichnet, dass** sich die Lauffläche (6) wie ein Gewindegang einen Wendel bildet.

13. Ölabstreifring (2) gemäß Anspruch 12, **dadurch gekennzeichnet, dass** die Laufflächen (6) im Bereich des Ringspaltes (22) jeweils in Umlaufrichtung verlängert sind und einander in Axialrichtung überlappen.

## Claims

1. Oil-scraper ring (2) for a piston of a piston engine,
with an annular body (2),
an encircling oil-scraper blade (4),
wherein the oil-scraper ring (2) has a height (H) from 2 to 5 mm between an upper ring flank (8) and a lower ring flank (10),
wherein the running surface (6) of the oil-scraper blade has a radius of curvature (r) in a radial cross-section which is between 1/40 to 1/10 of height (H), **characterised in that** the running surface (6) of the oil-scraper blade (4) is formed by a peripheral wire (16) made from an extremely high-strength material.

2. Oil-scraper ring (2) according to claim 1, **characterised in that** the oil-scraper ring (2) has a height (H) from 2.5 to 4 mm, preferably from 3 to 3.5 mm.

3. Oil-scraper ring (2) according to claim 1 or 2, **characterised in that** the radius of curvature (r) of the running surface (6) is equal to 1/30 to 1/15, preferably 1/25 to 1/20 of the height (H) of the oil-scraper ring.

4. Oil-scraper ring (2) according to claim 1, 2 or 3, **characterised in that** the oil-scraper ring (2) further comprises an expander (12).

5. Oil-scraper ring (2) according to claim 1, 2, 3 or 4, **characterised in that** the oil-scraper ring (2) is a garter spring assembly with one or two garter springs (12).

6. Oil-scraper ring (2) according to any one of the preceding claims, **characterised in that** a back of the oil-scraper blade (4) is coated with a wear-resistant coating (14).

7. Oil-scraper ring (2) according to claim 6, **characterised in that** the coating (14) is diamond-like carbon or an amorphous high-strength carbon-based layer which improves the lubricity and has a hardness of up to 5000 HV 0.2 and temperature stability of up to 500 °C and a coating thickness of up to 25 µm.

8. Oil-scraper ring (2) according to any one of the preceding claims, **characterised in that** the running surface (6) is arranged substantially in the middle between the upper ring flank (8) and the lower ring flank (10).

9. Oil-scraper ring (2) according to any one of the preceding claims, **characterised in that** the cross section of the upper blade flank (18) along the axis is convex.

10. Oil-scraper ring (2) according to any one of the preceding claims, **characterised in that** the cross section of the lower blade flank (20) along the axis is concave.

11. Oil-scraper ring (2) according to any one of the preceding claims, **characterised in that** the oil-scraper ring (2) has no radial oil channels.

12. Oil-scraper ring (2) according to any one of the preceding claims, **characterised in that** the running surface (6) forms a spiral in the manner of a thread.

13. Oil-scraper ring (2) according to claim 12, **characterised in that** the running surfaces (6) are each extended circumferentially in the region of the annular gap (22) and overlap each other in the axial direction.

## Revendications

1. Segment racleur d'huile (2) pour un piston d'un moteur à piston avec
un corps de segment (2),
un cordon de raclage d'huile circulaire (4),
le segment racleur d'huile (2) comportant entre un flanc de segment supérieur (8) et un flanc de segment inférieur (10) une hauteur (H) de 2 à 5 mm,
la surface de portée (6) du cordon de raclage comportant dans une section radiale un rayon de courbure (r), qui se situe entre 1/40 à 1/10 de la hauteur (H), **caractérisé en ce que** la surface de portée (6) du cordon de raclage (4) est formée par un fil circulaire (16) en un matériau hautement résistant.

2. Segment racleur d'huile (2) selon la revendication 1, **caractérisé en ce que** le segment racleur d'huile (2) comporte une hauteur (H) de 2,5 à 4 mm, de préférence de 3 à 3,5 mm.

3. Segment racleur d'huile (2) selon la revendication 1 ou 2, **caractérisé en ce que** le rayon de courbure (4) de la surface de portée (6) est 1/30 à 1/15, de préférence 1,25 à 1/20, de la hauteur (H) du segment racleur d'huile.

4. Segment racleur d'huile (2) selon la revendication 1,2 ou 3, **caractérisé en ce que** le segment racleur d'huile (2) comprend en outre un expandeur (12).

5. Segment racleur d'huile (2) selon la revendication 1,2,3 ou 4, **caractérisé en ce que** le segment racleur d'huile (2) est un système à ressort spiral annulaire avec un ou deux ressorts spiraux annulaires (12).

6. Segment racleur d'huile (2) selon l'une quelconque des revendications précédentes, **caractérisé en ce qu'**une partie dorsale du cordon de raclage (4) est revêtue d'un revêtement de protection anti-usure (14).

7. Segment racleur d'huile (2) selon la revendication 6, **caractérisé en ce que** le revêtement (14) est une couche de carbone adamantin ou à base de carbone amorphe à dureté élevée, lequel améliore le pouvoir lubrifiant et comprend une dureté allant jusqu'à 5000 HV 0,2 ainsi qu'une résistance à la température allant jusqu'à 500°C, ainsi qu'une épaisseur de revêtement allant jusqu'à 25 µm.

8. Segment racleur d'huile (2) selon l'une quelconque des revendications précédentes, **caractérisé en ce que** la surface de portée (6) est disposée pour l'essentiel au centre entre le flanc de segment supérieur (8) et inférieur (10).

9. Segment racleur d'huile (2) selon l'une quelconque des revendications précédentes, **caractérisé en ce que** le flanc de cordon supérieur (18) est formé de façon convexe dans une découpe le long de l'axe.

10. Segment racleur d'huile (2) selon l'une quelconque des revendications précédentes, **caractérisé en ce que** le flanc de cordon inférieur (20) est formé de façon concave dans une découpe le long de l'axe.

11. Segment racleur d'huile (2) selon l'une quelconque des revendications précédentes, **caractérisé en ce que** le segment racleur d'huile (2) ne comprend aucun conduit d'huile radial.

12. Segment racleur d'huile (2) selon l'une quelconque des revendications précédentes, **caractérisé en ce que** la surface de portée (6) est formée en une spirale comme un pas de vis.

13. Segment racleur d'huile (2) selon la revendication 12, **caractérisé en ce que** les surfaces de portée (6) sont respectivement prolongées dans la zone de la fente de segment (22) dans le sens périphérique et se chevauchent dans le sens axial.
